# EUROPÄISCHE PATENTSCHRIFT

(11) **EP 4 053 872 B1**
(45) Veröffentlichungstag und Bekanntmachung des Hinweises auf die Patenterteilung: **07.08.2024**
(21) Anmeldenummer: 21213226.0
(22) Anmeldetag: 08.12.2021
(51) Int. Cl.: H01H 13/85, H01H 13/06

(54) **STUFENHUBTASTER**
STEPPED RANGE KEY
TOUCHE À COURSE ÉTAGÉ

(30) Priorität: 01.03.2021 DE 102021104812
(43) Veröffentlichungstag der Anmeldung: 07.09.2022
(73) Patentinhaber: elobau GmbH & Co. KG, 88299 Leutkirch im Allgäu (DE)
(72) Erfinder: ZIMMERLE, Jürgen, 88167 Maierhöfen (DE)
(74) Vertreter: VKK Patentanwälte PartG mbB

(56) Entgegenhaltungen:
- DE-A1- 10 210 984
- DE-A1- 102005 028 049

## Beschreibung

Die vorliegende Erfindung betrifft einen Stufenhubtaster, aufweisend eine Übertragungseinheit, eine Bedieneinheit und eine, an einer ersten Führung geführten, Kontakteinheit, wobei die Bedieneinheit und/oder die Kontakteinheit axial beweglich zu der Übertragungseinheit ausgebildet sind, insbesondere zur Verwendung in Fahrzeugen und Arbeitsmaschinen im Bau- und Landtechnikbereich. Ein derartiger Stufenhubtaster ist beispielsweise aus dem Dokument DE 102 10 984 A1 bekannt.

Die Steuerung derartiger Arbeitsmaschinen und Fahrzeuge erfolgt häufig über Multifunktionsjoysticks und auf oder neben diesen angeordneten Tastern zur Auswahl und Steuerung bestimmter Bewegungsvorgänge der Maschinen, bzw. Fahrzeuge. Da die Bediener in der Regel starkem Lärm und Vibrationen ausgesetzt sind, ist eine korrekte und fehlersichere Betätigung dieser Taster erschwert, insbesondere die Erkennung eines erfolgten und erfolgreichen Betätigungsvorganges. Dies ist jedoch elementar zur Fehlervermeidung im Betrieb der Maschine, des Fahrzeuges

Eine Möglichkeit zur Signalisierung einer erfolgreichen Betätigung ist ein langer Bedienhub des Tasters, so dass der Bediener auch unter Vibrationseinflüssen oder durch seine Handschuhe hindurch ein eindeutiges haptisches Feedback bei Betätigung des Tasters erhält. Eine langer Bedienhub erfordert jedoch auch die Vergrößerung des Bauraums des Tasters. Dieser steht in den üblichen Einsatzumgebungen in der Regel nicht zur Verfügung steht, auch weil eine Vielzahl an Tastern auf Bedienpaneelen untergebracht sind und dieses nicht in gleichem Maße vergrößert werden kann.

Derartige Taster sollen zusätzlich auch ergonomisch zueinander angeordnet sein, um größere Bedienbewegungen zu vermeiden, was bei vergrößertem Bauraum nicht immer erreicht werden kann. Schließlich kann ein langer Bedienhub auch die Lebensdauer des Tasters verkürzen, da mehr Verschleiß- und Verschmutzungsfläche zur Verfügung steht.

Die vorliegende Erfindung stellt sich daher die Aufgabe, einen sicher bedienbaren Stufenhubtaster mit haptischem Feedback vorzuschlagen.

Diese Aufgabe wird gelöst durch einen Stufenhubtaster aufweisend eine starre Übertragungseinheit mit einem ersten Ende und einem diesen gegenüberliegenden zweiten Ende, eine am ersten Ende angeordnete Bedieneinheit sowie eine am zweiten Ende angeordnete Kontakteinheit, wobei die Bedieneinheit und/oder die Kontakteinheit axial beweglich zu der starren Übertragungseinheit ausgebildet sind, wobei mindestens eine zweite Rückstelleinheit mindestens mittelbar auf die Bedieneinheit wirkend ist, wobei die Kontakteinheit in einer ersten Führung axial geführt ist, wobei ein im Benutzungsfall relativ zur ersten Führung erfolgender Bedienhub unterschiedlich zu einem im Benutzungsfall relativ zur ersten Führung erfolgenden vermittelten Kontakthub ausgebildet ist, wobei das Verhältnis von Bedienhub zu Kontakthub größer 1:1, beträgt, wobei mindestens eine erste Rückstelleinheit mindestens mittelbar auf die Kontakteinheit und die Bedieneinheit wirkend ist.

Die Anordnung von Bedien- und Kontakteinheit an der Übertragungseinheit ist als Punkt-, Linien- oder Flächenberührung ausgebildet. Eine Linien- oder Flächenberührung reduziert die Wirkung auftretender Querkräfte mit Vorteil, da die Berührungsebene orthogonal zu einer axialen Hubachse ausgebildet ist. Dies ermöglicht ein möglichst verlustarmes Gleiten zwischen Bedieneinheit, Übertragungseinheit, Kontakteinheit und erster Führung. Erfindungsgemäß ist die Übertragungseinheit als starre Einheit ausgebildet, wobei der Begriff "starr" im Sinne dieser Erfindung bedeutet, dass die Einheit bei auf sie einwirkenden Bedienkräften keine oder nur eine sehr geringe Verformung zeigt. Erfindungsgemäß überträgt die Bedieneinheit eine Bewegung des Bedieners über die Übertragungseinheit auf die Kontakteinheit, die ihrerseits einen elektrischen Kontakt öffnet oder schließt. Hierbei ist es besonders vorteilhaft, dass das Verhältnis zwischen Bedienhub und Kontakthub größer 1 ist. Die Wegübersetzung erfolgt in einer vorteilhaften Weiterbildung der Erfindung über einen anfänglichen Leerweg der Bedieneinheit, wobei die Bedieneinheit innerhalb dieses Leerweges keine Wirkung auf die in ihrer Ruhelage befindliche Kontakteinheit ausübt. Erst bei Überschreiten des Leerweges wird die Bewegung der Bedieneinheit mittels der Übertragungseinheit auf die Kontakteinheit übertragen, so dass sich eine gleichförmige und gleichgerichtete Bewegung von Bedieneinheit und Kontakteinheit ergeben. Dies gibt dem Bediener ein ausreichendes haptisches Feedback, ohne dabei den Wirkhub des Tasters zu beeinträchtigten oder verändern zu müssen.

Mit großem Vorteil ermöglicht dieses Hubweg-Verhältnis die Einhaltung der bisherigen Baugröße derartiger Taster, der vergrößerte Bedienhub erfordert keine Anpassung der Außenmaße des Tasters selber. Mit großem Vorteil sind die Bedieneinheit, die Übertragungseinheit und die Kontakteinheit in einer Weiterbildung der Erfindung koaxial zueinander angeordnet, sodass der Leerweg der Bedieneinheit in der Bauform der jeweiligen Einheiten aufnehmbar ist. Auf diese Weise wird mit Vorteil auch auf Gelenke oder andere Elemente mit radialer Bewegungskomponente verzichtet, die Bewegungsübertragung ist damit so verlustarm wie möglich.

In Ausgestaltung der Erfindung ist vorgesehen, dass das Verhältnis von Bedienhub zu Kontakthub zwischen 1,0001:1 und 2:1 liegt, bevorzugt 1,5:1 beträgt und besonders bevorzugt gleich 2:1 ist und/oder wobei der Bedienhub ≥ 1,5 mm beträgt, insbesondere ≥ 2 mm beträgt. Diese Übersetzungsverhältnisse, bzw. Hubwege sind ein optimaler Kompromiss zwischen einer möglichst geringen Baugröße des Stufenhubtasters und einer optimalen Betätigungssicherheit für einen Benutzer. In einer Weiterbildung der Erfindung ist ein Verhältnis von >2:1 jedoch auch vorteilhaft, ebenso Bedienhübe von ≥ 5 mm bis hin zu 20 mm.

In Ausgestaltung der Erfindung ist vorgesehen, dass eine durch einen Bediener im Benutzungsfall auf die Bedieneinheit ausgeübte axiale Kraft mindestens teilweise durch die Übertragungseinheit auf die Kontakteinheit wirkend ist. Diese Ausgestaltung ermöglicht das Vorsehen von Rückstelleinheiten, deren Rückstellkräfte in einer vorteilhaften Weiterbildung so gewählt sind, dass eine axiale Verschiebung des Stufenhubtasters gegen diese problemlos durch einen Bediener zur Betätigung des Stufenhubtasters aufbringbar ist. Eine übliche axiale Betätigungskraft liegt zwischen 2 - 10 N, entsprechend sind die Gegenkräfte der Rückstelleinheiten so ausgelegt, dass diese in Summe 10 N nicht überschreiten. Je nach Wahl der Federkonstante ist der Kontakthub im Verhältnis zum Bedienhub verzögert und/oder verkürzt. In einer vorteilhaften Weiterbildung ist die Federkonstante innerhalb dieses Benutzungsumfeldes so weich gewählt, dass das Verhältnis von Bedienhub zu Kontakthub größer 1:1 ist, insbesondere liegt eine Federkonstante in einer vorteilhaften Weiterbildung der Erfindung zwischen 2.000 - 10.000 N/m.

Erfindungsgemäß ist vorgesehen, dass mindestens eine erste Rückstelleinheit mindestens mittelbar auf die Kontakteinheit und die Bedieneinheit wirkend ist, und mindestens eine zweite Rückstelleinheit mindestens mittelbar auf die Bedieneinheit wirkend ist. Mit großem Vorteil wirken die erste Rückstelleinheit unmittelbar auf die Kontakteinheit und mittelbar auf die Bedieneinheit und die zweite Rückstelleinheit unmittelbar auf die Bedieneinheit. Da der im Verhältnis zum Kontakthub größere Bedienhub keine vollständige Rückstellung der Bedieneinheit durch Rückstellung des Kontakthubes ermöglicht, ist die zweite Rückstelleinheit vorgesehen, die die Bedieneinheit über den Leerweg zu ihrer Ausgangsposition verbringend ist.

Eine Anordnung der ersten Rückstelleinheit zwischen erster Führung und Kontakteinheit sowie zwischen Übertragungseinheit und Gehäuse ist eine vorteilhafte Weiterbildung der Erfindung. Bei dieser Anordnung der ersten Rückstelleinheit ist eine starre Verbindung zwischen Übertragungseinheit und Kontakteinheit vorteilhaft, da so die erste Rückstelleinheit auch die Übertragungseinheit rückstellt. Die starre Verbindung wird in vorteilhafter Weiterbildung durch Kleben, Löten oder Verschrauben erreicht. Bei einer direkten Einwirkung der ersten Rückstelleinheit auf die Kontakteinheit ist diese starre Verbindung ebenfalls vorteilhaft. Die zweite Rückstelleinheit ist in vorteilhafter Weiterbildung zwischen Bedieneinheit und Gehäuse, zwischen Bedieneinheit und Übertragungseinheit, zwischen Übertragungseinheit und Kontakteinheit oder zwischen Übertragungseinheit und Gehäuse angeordnet. Da die zweite Rückstelleinheit auf die Bedieneinheit mindestens mittelbar wirkend ist, besteht auch eine lose Verbindung zwischen der Einheit, an der die zweite Rückstelleinheit angeordnet ist, und der Kontakteinheit. Die erste Rückstelleinheit ist in besonders vorteilhafter Weise bevorzugt als Blechfeder ausgebildet, die unterhalb der Kontakteinheit - bevorzugt ein Mikroschalter - angeordnet ist. Dies führt zu einer hohen Zuverlässigkeit des Bauteils und vermeidet ansonsten notwendige Ansteuerungseinheiten, was Komplexität und Größe vorteilhaft minimiert. In vorteilhafter Weiterbildung sind erste und zweite Rückstelleinheit als Spiralfedern, elektromechanische oder elektromagnetische Aktuatoren oder als pneumatische oder hydraulische Einheiten ausgebildet.

In Ausgestaltung der Erfindung ist vorgesehen, dass der Stufenhubtaster ein Gehäuse aufweist, wobei das Gehäuse bevorzugt ein erstes und ein zweites Gehäuseteil aufweist, wobei die erste Führung, die Kontakteinheit, die erste Rückstelleinheit, die Übertragungseinheit und die Bedieneinheit in dem ersten Gehäuseteil aufgenommen sind und die zweite Rückstelleinheit in dem zweiten Gehäuseteil aufgenommen ist. Um die Komplexität und damit die Kosten zur Fertigung des Gehäuses zu reduzieren und Material einzusparen, ist dieses vorteilhaft mehrteilig ausgebildet. Das zweite und/oder das erste Gehäuseteil sind in einer vorteilhaften Weiterbildung der Erfindung auch zur Aufnahme mehrerer Stufenhubtaster nebeneinander ausgebildet. Die bevorzugte Zweiteilung des Gehäuses ist vorteilhaft, da so Dichtungen an und zwischen den Gehäuseteilen anordenbar sind und weitere Fixierungsmittel verzichtbar sind.

In Weiterbildung der Erfindung ist vorgesehen, dass die zweite Rückstelleinheit ein elastischer Balg ist, insbesondere angeordnet zwischen der Bedieneinheit und dem Gehäuse und bevorzugt als Druckfedereinheit ausgebildet ist. Dieser elastische Balg ist auf einfache Weise an die Geometrien von Bedieneinheit und Gehäuse anpassbar, er besteht vorzugsweise aus gummiartigen Materialen wie beispielsweise NBR oder EPDM oder insbesondere Silikon. Bei diesen Materialien führt eine Verformung zu einer Rückstellkraft, die den Balg in seine Ausgangsposition rückführt.

Weiter ist in Ausgestaltung der Erfindung vorgesehen, dass die zweite Rückstelleinheit als Dichtung zwischen Bedieneinheit und Gehäuse ausgebildet ist, insbesondere als eine an dem zweiten Gehäuseteil angeordnete Labyrinthdichtung. Eine solche vereint besonders vorteilhaft zwei maßgebliche Funktionen innerhalb einer Einheit: zum einen schützt diese Anordnung die im Gehäuseraum liegenden Bauteile vor Schmutz, Wasser und anderen Umwelteinflüssen. Zum anderen steigert dies die Dichtheit des Schalters, bzw. Tasters, so dass der Taster in einer vorteilhaften Weiterbildung problemlos mit großen Wassermengen in hohen Geschwindigkeiten gereinigt werden kann, also Dampfstrahler einsetzbar sind. In vorteilhafter Weiterbildung der Erfindung hat die Dichtung zwischen zweiter Rückstelleinheit und Gehäuse einen Schutzgrad von mindestens IP69K.

Das erste Gehäuseteil weist in einer vorteilhaften Weiterbildung der Erfindung mindestens einen ersten Anschlag für die Übertragungseinheit auf und die Übertragungseinheit weist mindestens einen zweiten Anschlag für die Bedieneinheit auf, wobei insbesondere der erste Anschlag als radial vollumlaufender Anschlag ausgebildet ist. Der erste und der zweite Anschlag begrenzen in vorteilhafter Weise die, durch die Rückstelleinheiten erzeugten, Bewegungen der Bedieneinheit beziehungsweise der Übertragungseinheit. Je größer der Abstand zwischen erstem und zweitem Anschlag ist, desto größer ist der unabhängig voneinander verfahrbare axiale Weg und somit der Leerweg.

In Weiterbildung der Erfindung ist vorgesehen, dass das erste Gehäuseteil eine zweite Führung aufweist, wobei die Übertragungseinheit über die zweite Führung geführt ist und die Übertragungseinheit eine dritte Führung aufweist, wobei die Bedieneinheit über die dritte Führung geführt ist. Die erste und zweite Führung sind in einer vorteilhaften Weiterbildung jeweils durch Anformungen, insbesondere durch senkrecht verlaufende Rippen ausgebildet, wodurch in vorteilhafter Weise die Reibverluste mittels Linienberührungen reduziert sind. Die Form- und Lagetoleranzen sind in einem Führungsbereich in einer vorteilhaften Weiterbildung enger, als in einem die Führung nicht beeinflussenden Bereich, um eine zuverlässige Führung zu gewährleisten und die Fertigungskosten möglichst gering zu halten.

Der Stufenhubtaster weist in einer vorteilhaften Weiterbildung ebenfalls eine Anzeigeeinheit auf, wobei mindestens eine Einheit aus der Bedieneinheit oder der Übertragungseinheit als eine Lichtleitereinheit ausgebildet ist. Die Anzeigeeinheit ist in vorteilhafter Weiterbildung als eine LED ausgebildet und dauerhaft aktiv. LED's sind langlebig bei hohem Wirkungsgrad und bauen klein. Die Anzeigeeinheit ist in einer vorteilhaften Weiterbildung auf derselben Platine wie die Kontakteinheit angeordnet, um ansonsten notwendige zusätzliche Leitungen zu vermeiden. Als Lichtleiter sind in vorteilhafter Weiterbildung Materialen wie vollständig oder teiltransparente Kunststoffe und Glasfasermaterialien geeignet. Mit großem Vorteil ist der Lichtleiter wegen des Leerhubs ständig nah an der Lichtquelle und die Anzeigeeinheit daher bei gleicher Beleuchtungsstärke der Lichtquelle besonders hell. Mit anderen Worten ist der Abstand des Lichtleiters zur Lichtquelle nicht oder nur gering größer als der Kontakthub.

Die Erfindung wird nachfolgend anhand einer Ausführungsform anhand der Figuren der Zeichnung näher erläutert, wobei
- **Fig. 1**: eine erste Schnittansicht in einer Ausgangsposition des Stufenhubtasters,
- **Fig. 2**: eine zweite Schnittansicht in einer Ausgangsposition des Stufenhubtasters,
- **Fig. 3**: eine erste Schnittansicht in einer Zwischenposition des Stufenhubtasters,
- **Fig. 4**: eine erste Schnittansicht in einer betätigten Position des Stufenhubtasters,
- **Fig. 5**: eine Explosionszeichnung der Bedieneinheit 5, der Übertragungseinheit 2 sowie des ersten Gehäuseteils 11 als Teilschnitt zeigen.

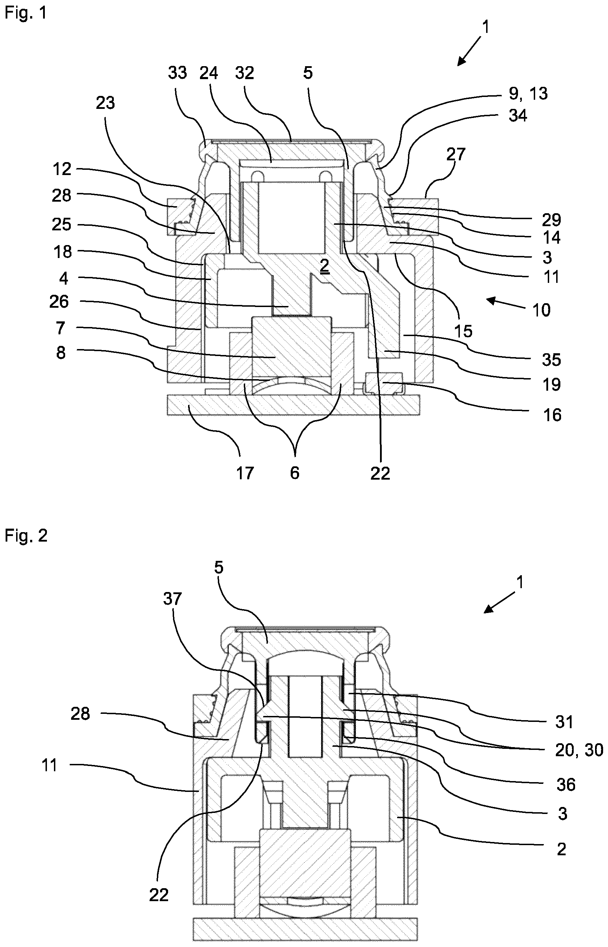

**Fig. 1** zeigt eine erste Schnittansicht in einer Ausgangsposition des Stufenhubtasters 1, wobei eine Kontakteinheit 7 mittels einer ersten Führung 6 axial verschiebbar gelagert und zu einer Platine 17 beabstandet angeordnet ist. Zwischen Kontakteinheit 7 und Platine 17 ist eine erste Rückstelleinheit 8 angeordnet. Weiter ist über der Kontakteinheit 7 eine Übertragungseinheit 2 angeordnet. Die Übertragungseinheit 2 weist ein erstes Ende 3 und ein zweites Ende 4 auf, wobei das erste Ende 3 einen polygonen Hohlkörper aufweist und das zweite Ende 4 eine Zylinderform aufweist. Die Formkörper des ersten und zweiten Endes 3, 4 sind koaxial zueinander angeordnet. In derselben Erstreckungsrichtung wie das zweite Ende 4 weist die Übertragungseinheit 2 eine hohlkörperförmige Umrahmung 18 auf, wobei die Wandstärke der Umrahmung 18 in einem Teilbereich 19 deutlich erhöht, insbesondere mindestens verdoppelt ist. Dieser Teilbereich 19 weist weiter eine größere axiale Länge auf, insbesondere ist der Teilbereich 19 mindestens 1,5mal so lang wie die Umrahmung 18 und ist exzentrisch ausgebildet. Der Teilbereich 19 ist in einer Ausgangsposition beabstandet von einer Anzeigeeinheit 16. Die Anzeigeeinheit 16 ist benachbart zur ersten Führung 6 auf der Platine 17 angeordnet. Über der Übertragungseinheit 2 ist eine Bedieneinheit 5 angeordnet. Diese weist ebenfalls einen einseitig geschlossenen polygonen Hohlkörper auf. Eine geöffnete Stirnfläche 22 der Bedieneinheit 5 ist parallel zu einer, orthogonal zum ersten Ende 3 ausgebildeten, Anschlagfläche 23 ausgebildet und beabstandet von dieser angeordnet. Das erste Ende 3 ist ebenfalls beabstandet zu einer inneren Stirnfläche 24 der Bedieneinheit 5 angeordnet. Die erste Führung 6, die Kontakteinheit 7, die erste Rückstelleinheit 8, die Übertragungseinheit 2 sowie die Bedieneinheit 5 sind zumindest teilweise in einem ersten Gehäuseteil 11 aufgenommen. Das erste Gehäuseteil 11 weist eine, insbesondere an die Außenkonturen der Übertragungseinheit 2 und der Bedieneinheit 5 angepasste, Form auf, wobei eine Mantelfläche 25 der Umrahmung 18 von einer Gehäuseteilinnenfläche 26 beabstandet ausgebildet ist. Die Anschlagfläche 23 steht mit einem ersten Anschlag 15 in Berührung, wobei der erste Anschlag 15 als eine, parallel zur Anschlagfläche 23 verlaufende, Fläche des ersten Gehäuseteils 11 ausgebildet ist und die axiale Bewegung der Übertragungseinheit 2 nach oben begrenzt. Oberhalb des ersten Anschlages 15 ist ein Verjüngungsbereich 28 des ersten Gehäuseteils 11 ausgebildet, wobei innerhalb dieses Verjüngungsbereichs 28 die Bedieneinheit 5 angeordnet ist. An einer äußeren Stirnfläche 32 der Bedieneinheit 5 ist ein Rand 33 ausgebildet, welcher insbesondere aus einem elastischen Gummi gebildet ist. Zwischen Bedieneinheit 5 und Rand 33 ist ein erstes Ende einer zweiten Rückstelleinheit 9 angeordnet. Die zweite Rückstelleinheit 9 ist ebenfalls aus einem elastischen Material als elastischer Balg 13 ausgebildet. Die zweite Rückstelleinheit 9 ist an ihrem, dem ersten Ende gegenüberliegenden, zweiten Ende zwischen dem ersten Gehäuseteil 11 und einem zweiten Gehäuseteil 12 angeordnet, wobei die zweite Rückstelleinheit 9, das zweite Gehäuseteil 12 in einer L-Form umgreifend, ausgebildet ist und einen, eine Gehäuseteiloberseite 27 berührenden, im Wesentlichen dreieckförmigen Steg 34 aufweist. Das erste und zweite Gehäuseteil 11, 12 bilden das Gehäuse 10 des Stufenhubtasters 1 aus. Darüber hinaus ist insbesondere ein langer Schenkel 29 des L's mit einer Vielzahl an Erhöhungen und Vertiefungen ausgebildet, durch welche eine Labyrinthdichtung 14 realisiert ist. Die Ausbildung des L's, der Labyrinthdichtung 14 und des Steges 34 dienen allesamt der zuverlässigen Dichtung eines inneren Gehäuseraumes 35 vor äußeren Einflüssen.

**Fig. 2** zeigt eine zweite Schnittansicht in einer Ausgangsposition des Stufenhubtasters 1, wobei die zweite Schnittansicht orthogonal zur ersten Schnittansicht orientiert ist. Die Übertragungseinheit 2 weist an ihrem ersten Ende 3 zwei sich gegenüberliegend und in einer Bewegungsachse gespiegelt angeordnete schanzenförmige Nasen 20 auf. Eine zweite Schräge 37 der Schanzenform der Nasen 20 ist dabei jeweils nach oben gerichtet. Die Nasen 20 sind als dritter Anschlag 30 für die Bedieneinheit 5 ausgebildet, wobei die zwei Nasen 20 jeweils in einer von zwei sich gegenüberliegenden Öffnungen 31 der Bedieneinheit 5 angeordnet sind. Die Nasen 20 stehen in Berührung mit der Bedieneinheit 5 und begrenzen die axiale Verschiebung der Bedieneinheit 5 nach oben. Darüber hinaus ist das erste Gehäuseteil 11 innerhalb des Verjüngungsbereichs 28 trapezförmig ausgebildet. Die geöffnete Stirnfläche 22 weist zwei aufeinander zulaufende Schrägen auf, wobei eine erste Schräge 36 jeweils parallel zu der zweiten Schräge 37 der Nase 20 ausgebildet ist.

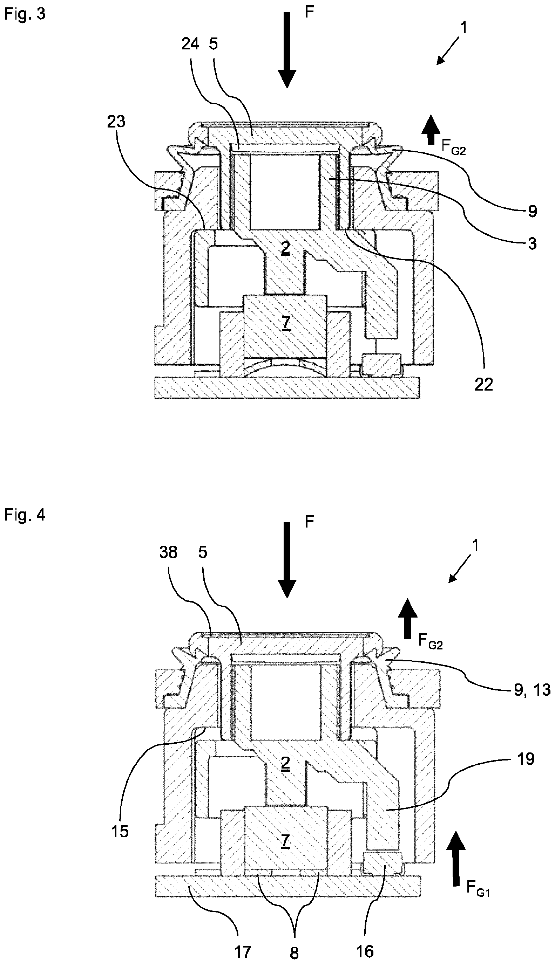

**Fig. 3** zeigt eine erste Schnittansicht in einer Zwischenposition des Stufenhubtasters 1 während seiner Betätigung, wobei die Bedieneinheit 5 durch eine axiale Kraft F in Richtung der Übertragungseinheit 2 bewegt ist, sodass die Anschlagfläche 23 mit der geöffneten Stirnfläche 22 in Berührung steht. Das erste Ende 3 ist weiterhin beabstandet zur inneren Stirnfläche 24 angeordnet. Durch die axiale Bewegung der Bedieneinheit 5 ist die zweite Rückstelleinheit 9 elastisch verformt und weist eine, entgegen der axialen Kraft F gerichtete und auf die Bedieneinheit 5 unmittelbar wirkende, zweite Gegenkraft F_{G2} auf. Die Übertragungseinheit 2 und die Kontakteinheit 7 sind im Vergleich zur Darstellung in Fig. 1 unbewegt, was einen Leerweg der Bedieneinheit 5 ausbildet.

**Fig. 4** zeigt eine erste Schnittansicht in einer betätigten Position des Stufenhubtasters 1, wobei die axiale Kraft F über die Bedieneinheit 5 und die Übertragungseinheit 2 auf die Kontakteinheit 7 wirkend ist und diese derart bewegt ist, dass sie mit der Platine 17 mittelbar, insbesondere über die erste Rückstelleinheit 8 in Berührung steht. Innerhalb der Zwischenposition und der betätigten Position des Stufenhubtasters 1 bewegen sich die Bedieneinheit 5, die Übertragungseinheit 2 sowie die Kontakteinheit 7 gleichsam. Der elastische Balg 13 ist maximal verformt und weist demnach seine maximale zweite Gegenkraft F_{G2} zur axialen Kraft F auf. Auch die erste Rückstelleinheit 8, welche als Blechfeder ausgebildet ist, weist in dieser Position eine maximale erste Gegenkraft F_{G1} zur axialen Kraft F auf. Der Abstand zwischen dem Teilbereich 19 und der Anzeigeeinheit 16 ist im Vergleich zu dem in einer Ausgangs- oder Zwischenposition verringert. Die Übertragungseinheit 2 ist in diesem Ausführungsbeispiel als Lichtleitereinheit ausgebildet, wobei diese das von der Anzeigeeinheit 16 emittierte Licht zur Bedieneinheit 5 leitet. Durch das erfindungsgemäße Verhältnis des Bedienhubes zu dem Kontakthub ist der Abstand zwischen Anzeigeeinheit 16 und Teilbereich 19 in allen Positionen effektiv verkürzt, sodass das emittierte Licht über einen geringen Abstand in die Lichtleitereinheit aufnehmbar ist und demnach eine Reduktion von Verlusten beispielsweise durch Streuung vorteilhaft realisiert ist. Die Bedieneinheit 5 weist in vorteilhafter Weiterbildung ein voll- oder teilweise transparentes Material auf, wobei das durch die Lichtleitereinheit geleitete emittierte Licht durch die Bedieneinheit 5 für einen Bediener erkennbar ist. In einer vorteilhaften Weiterbildung der Erfindung ist auf der Bedieneinheit 5 ein Label 38 angeordnet, wobei das Label 38 lichtundurchlässig ist. Bei einer Rückstellung wirken zwischen der betätigten Position und der Zwischenposition sowohl die erste, als auch die zweite Rückstelleinheit 8, 9 auf die Bedieneinheit 5. Zwischen der Zwischenposition und der Ausgangsposition wirkt lediglich die zweite Rückstelleinheit 9 auf die Bedieneinheit 5, da eine, nach oben gerichtete, Bewegung der Übertragungseinheit 2 und der Kontakteinheit 7 durch den ersten Anschlag 15 begrenzt ist.

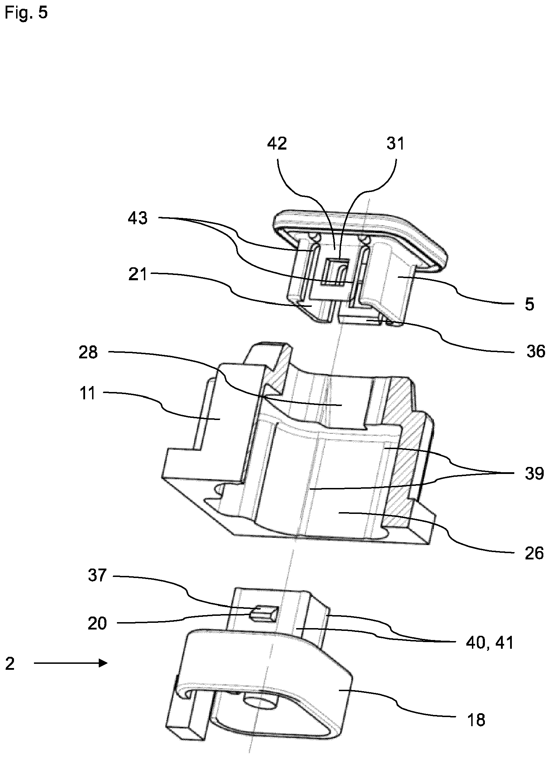

**Fig. 5** zeigt eine Explosionszeichnung der Bedieneinheit 5, der Übertragungseinheit 2 sowie des ersten Gehäuseteils 11 als Teilschnitt. Das erste Gehäuseteil 11 weist eine zweite Führung 39 auf, wobei die zweite Führung 39 in Form von senkrecht verlaufenden Rippen ausgebildet ist, wobei an der Gehäuseteilinnenfläche 26 jeweils zwei Rippen pro Seitenfläche ausgebildet sind, die in einer montierten Position mit der Umrahmung 18 in Berührung stehen. Die Übertragungseinheit 2 weist eine dritte Führung 40 auf, wobei die dritte Führung 40 in Form von senkrecht verlaufenden Rippen ausgebildet ist, wobei in jeder Außenkante 41 der Übertragungseinheit 2 jeweils eine Rippe ausgebildet ist, die in einer montierten Position mit einer inneren Bedieneinheitsumfangsfläche 21 in Berührung stehen. Die Bedieneinheit 5 wird von oben in das erste Gehäuseteil 11 montiert ist, wobei sich vor der Montage die erste und zweite Schräge 36, 37 gegenüberstehen. Die Bedieneinheit 5 weist in einem Öffnungsbereich 42 jeweils zwei senkrecht verlaufende Durchgangsnuten 43 auf, was eine Elastizität der sich gegenüberliegend angeordneten Öffnungsbereiche 42 ausbildet. Während der Montage wird der Öffnungsbereich 42 von oben auf die Nase 20 gedrückt, wobei die erste und zweite Schräge 36, 37 einander berührend angeordnet sind und die Kraftrichtung derart beeinflussen, dass eine entstehende Querkraft die Öffnungsbereiche 42 der Bedieneinheit 5 nach außen reversibel verformt, sodass jeweils eine Nase 20 in eine Öffnung 31 gleitet und der Öffnungsbereich 42 anschließend in seine ursprüngliche Anordnung zurückkehrt. Der Verjüngungsbereich 28 ist in vorteilhafter Weise teilweise trapezförmig ausgebildet, um der reversiblen Verformung des Öffnungsbereichs 42 während der Montage Raum zu geben. Bei abgeschlossener Montage ist die Bedieneinheit 5 durch Formschluss, insbesondere durch eine Schnapphakenverbindung mit der Übertragungseinheit 2 in ihrer axialen Bewegungsfreiheit begrenzt. Weitere Gründe für die Ausbildung der ersten und zweiten Schrägen 36, 37 sind die Annäherung der Bauform an den in diesem Bereich befindlichen Kraftverlauf während einer Belastung sowie notwendige Entformungsschrägen zur zuverlässigen Entformung von Formteilen aus einem Werkzeug. Entformungsschrägen sind insbesondere bei der Fertigung von Formteilen mittels Spritzgussverfahren relevant. Die Übertragungseinheit 2 ist von unten in das erste Gehäuseteil 11 montiert.

### BEZUGSZEICHENLISTE

- 1: Stufenhubtaster
- 2: Übertragungseinheit
- 3: erstes Ende
- 4: zweites Ende
- 5: Bedieneinheit
- 6: erste Führung
- 7: Kontakteinheit
- 8: erste Rückstelleinheit
- 9: zweite Rückstelleinheit
- 10: Gehäuse
- 11: erstes Gehäuseteil
- 12: zweites Gehäuseteil
- 13: elastischer Balg
- 14: Labyrinthdichtung
- 15: erster Anschlag
- 16: Anzeigeeinheit
- 17: Platine
- 18: Umrahmung
- 19: Teilbereich
- 20: Nase
- 21: innere Bedieneinheitsumfangsfläche
- 22: geöffnete Stirnfläche
- 23: Anschlagfläche
- 24: innere Stirnfläche
- 25: Mantelfläche
- 26: Gehäuseteilinnenfläche
- 27: Gehäuseteiloberseite
- 28: Verjüngungsbereich
- 29: langer Schenkel
- 30: dritter Anschlag
- 31: Öffnung
- 32: äußere Stirnfläche
- 33: Rand
- 34: Steg
- 35: Gehäuseraum
- 36: erste Schräge
- 37: zweite Schräge
- 38: Label
- 39: zweite Führung
- 40: dritte Führung
- 41: Außenkante
- 42: Öffnungsbereich
- 43: Durchgangsnuten
- FG1: erste Gegenkraft
- FG2: zweite Gegenkraft
- F: axiale Kraft

## Patentansprüche

1. Stufenhubtaster (1) aufweisend eine starre Übertragungseinheit (2) mit einem ersten Ende (3) und einem diesen gegenüberliegenden zweiten Ende (4), eine am ersten Ende (3) angeordnete Bedieneinheit (5) sowie eine am zweiten Ende (4) angeordnete Kontakteinheit (7), wobei die Bedieneinheit (5) und/oder die Kontakteinheit (7) axial beweglich zu der starren Übertragungseinheit (2) ausgebildet sind, wobei mindestens eine zweite Rückstelleinheit (9) mindestens mittelbar auf die Bedieneinheit (5) wirkend ist, **dadurch gekennzeichnet, dass** die Kontakteinheit (7) in einer ersten Führung (6) axial geführt ist, wobei ein im Benutzungsfall relativ zur ersten Führung (6) erfolgender Bedienhub unterschiedlich zu einem im Benutzungsfall relativ zur ersten Führung erfolgenden vermittelten Kontakthub ausgebildet ist, wobei das Verhältnis von Bedienhub zu Kontakthub größer 1:1, beträgt, wobei mindestens eine erste Rückstelleinheit (8) mindestens mittelbar auf die Kontakteinheit (7) und die Bedieneinheit (5) wirkend ist.

2. Stufenhubtaster (1) gemäß Anspruch 1, **dadurch gekennzeichnet, dass** das Verhältnis von Bedienhub zu Kontakthub zwischen 1,0001:1 und 2:1 liegt, bevorzugt 1,5:1 beträgt und besonders bevorzugt gleich 2:1 ist und/oder wobei der Bedienhub ≥ 1,5 mm beträgt, insbesondere ≥ 2 mm beträgt.

3. Stufenhubtaster (1) nach Anspruch 1 oder 2, **dadurch gekennzeichnet, dass** eine durch einen Bediener im Benutzungsfall auf die Bedieneinheit (5) ausgeübte axiale Kraft (F) mindestens teilweise durch die Übertragungseinheit (2) auf die Kontakteinheit (7) wirkend ist.

4. Stufenhubtaster (1) nach einem der Ansprüche 1, 2 oder 3, **dadurch gekennzeichnet, dass** er ein Gehäuse (10) aufweist, wobei das Gehäuse (10) ein erstes und ein zweites Gehäuseteil (11, 12) aufweist, wobei die erste Führung (6), die Kontakteinheit (7), die erste Rückstelleinheit (8), die Übertragungseinheit (2) und die Bedieneinheit (5) in dem ersten Gehäuseteil (11) aufgenommen sind und die zweite Rückstelleinheit (9) in dem zweiten Gehäuseteil (12) aufgenommen ist.

5. Stufenhubtaster (1) nach einem der vorhergehenden Ansprüche, **dadurch gekennzeichnet, dass** die zweite Rückstelleinheit (9) als ein elastischer Balg (13) ausgebildet ist, wobei der elastische Balg (13) zwischen der Bedieneinheit (5) und dem Gehäuse (10) angeordnet ist, wobei der elastische Balg (13) als Druckfedereinheit ausgebildet ist.

6. Stufenhubtaster (1) nach einem der vorhergehenden Ansprüche, **dadurch gekennzeichnet, dass** die zweite Rückstelleinheit (9) als Dichtung zwischen Bedieneinheit (5) und Gehäuse (10) ausgebildet ist, insbesondere als eine an dem zweiten Gehäuseteil (12) angeordnete Labyrinthdichtung (14) ausgebildet ist.

7. Stufenhubtaster (1) nach einem der vorhergehenden Ansprüche, **dadurch gekennzeichnet, dass** das erste Gehäuseteil (11) mindestens einen ersten Anschlag (15) für die Übertragungseinheit (2) aufweist und die Übertragungseinheit mindestens einen zweiten Anschlag (27) für die Bedieneinheit (5) aufweist, wobei insbesondere der erste Anschlag (15) als radial vollumfassender Anschlag (15) ausgebildet ist.

8. Stufenhubtaster (1) nach einem der vorhergehenden Ansprüche, **dadurch gekennzeichnet, dass** das erste Gehäuseteil (11) eine zweite Führung (39) aufweist, wobei die Übertragungseinheit (2) über die zweite Führung (39) geführt ist und die Übertragungseinheit (2) eine dritte Führung (40) aufweist, wobei die Bedieneinheit (5) über die dritte Führung (40) geführt ist.

9. Stufenhubtaster (1) nach einem der vorhergehenden Ansprüche, **dadurch gekennzeichnet, dass** er eine Anzeigeeinheit (16) aufweist, wobei mindestens eine Einheit aus der Bedieneinheit (5) oder der Übertragungseinheit (2) als eine Lichtleitereinheit ausgebildet ist, wobei ein maximaler Abstand der Lichtleiterheinheit zu einer Lichtquelle nur unwesentlich größer als der Kontakthub ist.

## Claims

1. A step stroke button (1) comprising a rigid transmission unit (2) with a first end (3) and a second end (4) opposite thereto, an operating unit (5) arranged at the first end (3) and a contact unit (7) arranged at the second end (4), wherein the operating unit (5) and/or the contact unit (7) are designed to be axially movable relative to the rigid transmission unit (2), at least one second resetting unit (9) acting at least indirectly on the operating unit (5), **characterized in that** the contact unit (7) is guided axially in a first guide (6), an operating stroke relative to the first guide (6) in the case of use being designed differently from a mediated contact stroke relative to the first guide in the case of use, the ratio of operating stroke to contact stroke being greater than 1:1, wherein at least one first resetting unit (8) acts at least indirectly on the contact unit (7) and the operating unit (5).

2. A step stroke button (1) according to claim 1,
**characterized in that** the ratio of operating stroke to contact stroke is between 1.0001:1 and 2:1, preferably is 1.5:1 and particularly preferably is equal to 2:1 and/or wherein the operating stroke is ≥ 1.5 mm, in particular is ≥ 2 mm.

3. A step stroke button (1) according to claim 1 or 2,
**characterized in that** an axial force (F) exerted on the operating unit (5) by an operator in the case of use acts at least partially on the contact unit (7) through the transmission unit (2).

4. A step stroke button (1) according to one of claims 1, 2 or 3, **characterized in that** it has a housing (10), the housing (10) having a first and a second housing part (11, 12), the first guide (6), the contact unit (7), the first resetting unit (8), the transmission unit (2) and the operating unit (5) being accommodated in the first housing part (11) and the second resetting unit (9) being accommodated in the second housing part (12).

5. A step stroke button (1) according to one of the preceding claims, **characterized in that** the second resetting unit (9) is designed as a elastic bellows (13), the elastic bellows (13) being arranged between the operating unit (5) and the housing (10), the elastic bellows (13) being designed as a compression spring unit.

6. A step stroke button (1) according to one of the preceding claims, **characterized in that** the second resetting unit (9) is designed as a seal between the operating unit (5) and the housing (10), in particular as a labyrinth seal (14) arranged on the second housing part (12).

7. A step stroke button (1) according to one of the preceding claims, **characterized in that** the first housing part (11) has at least one first stop (15) for the transmission unit (2) and the transmission unit has at least one second stop (27) for the operating unit (5), in particular the first stop (15) being designed as a radially fully encompassing stop (15).

8. A step stroke button (1) according to one of the preceding claims, **characterized in that** the first housing part (11) has a second guide (39), wherein the transmission unit (2) is guided in the second guide (39) and the transmission unit (2) has a third guide (40), wherein the operating unit (5) is guided in the third guide (40).

9. A step stroke button (1) according to one of the preceding claims, **characterized in that** it has a display unit (16), wherein at least one unit from the operating unit (5) or the transmission unit (2) is designed as a light guide unit, wherein a maximum distance of the light guide unit to a light source is only insignificantly greater than the contact stroke.

## Revendications

1. Bouton-poussoir à course étagée (1) présentant une unité de transmission rigide (2) avec une première extrémité (3) et une deuxième extrémité (4) opposée à celle-ci, une unité de commande (5) disposée à la première extrémité (3) ainsi qu'une unité de contact (7) disposée à la deuxième extrémité (4), l'unité de commande (5) et/ou l'unité de contact (7) étant réalisées mobiles axialement par rapport à l'unité de transmission rigide (2), au moins une deuxième unité de rappel (9) agissant au moins indirectement sur l'unité de commande (5), **caractérisée en ce que** l'unité de contact (7) est guidée axialement dans un premier guide (6), une course de commande effectuée en cas d'utilisation par rapport au premier guide (6) étant réalisée différemment d'une course de contact transmise effectuée en cas d'utilisation par rapport au premier guide, le rapport de la course de commande à la course de contact étant supérieur à 1:1, au moins une première unité de rappel (8) agissant au moins indirectement sur l'unité de contact (7) et l'unité de commande (5).

2. Bouton-poussoir à course étagée (1) selon la revendication 1, **caractérisé en ce que** le rapport entre la course de commande et la course de contact est compris entre 1,0001:1 et 2:1, est de préférence de 1,5:1 et est de manière particulièrement préférée égal à 2:1 et/ou dans lequel la course de commande est ≥ 1,5 mm, en particulier ≥ 2 mm.

3. Bouton-poussoir à course étagée (1) selon la revendication 1 ou 2, **caractérisé en ce qu'**une force axiale (F) exercée par un opérateur sur l'unité de commande (5) en cas d'utilisation agit au moins partiellement sur l'unité de contact (7) par l'intermédiaire de l'unité de transmission (2).

4. Bouton-poussoir à course étagée (1) selon l'une des revendications 1, 2 ou 3, **caractérisé en ce qu'**il comprend un boîtier (10), le boîtier (10) comprenant une première et une deuxième partie de boîtier (11, 12), le premier guide (6), l'unité de contact (7), la première unité de rappel (8), l'unité de transmission (2) et l'unité de commande (5) étant logés dans la première partie de boîtier (11) et la deuxième unité de rappel (9) étant logée dans la deuxième partie de boîtier (12).

5. Bouton-poussoir à course étagée (1) selon l'une des revendications précédentes, **caractérisé en ce que** la deuxième unité de rappel (9) est conçue comme un soufflet élastique (13), le soufflet élastique (13) étant disposé entre l'unité de commande (5) et le boîtier (10), le soufflet élastique (13) étant conçu comme une unité de ressort de compression.

6. Bouton-poussoir à course étagée (1) selon l'une des revendications précédentes, **caractérisé en ce que** la deuxième unité de rappel (9) est conçue comme un joint d'étanchéité entre l'unité de commande (5) et le boîtier (10), en particulier comme un joint labyrinthe (14) disposé sur la deuxième partie de boîtier (12).

7. Bouton-poussoir à course étagée (1) selon l'une des revendications précédentes, **caractérisé en ce que** la première partie de boîtier (11) présente au moins une première butée (15) pour l'unité de transmission (2) et l'unité de transmission présente au moins une deuxième butée (27) pour l'unité de commande (5), la première butée (15) étant en particulier conçue comme une butée (15) entourant entièrement radialement.

8. Bouton-poussoir à course étagée (1) selon l'une des revendications précédentes, **caractérisé en ce que** la première partie de boîtier (11) présente un deuxième guidage (39), l'unité de transmission (2) étant guidée par le deuxième guidage (39) et l'unité de transmission (2) présentant un troisième guidage (40), l'unité de commande (5) étant guidée par le troisième guidage (40).

9. Bouton-poussoir à course étagée (1) selon l'une des revendications précédentes, **caractérisé en ce qu'**il présente une unité d'affichage (16), au moins une unité de l'unité de commande (5) ou de l'unité de transmission (2) étant conçue comme une unité de guide de lumière, une distance maximale de l'unité de guide de lumière à une source de lumière n'étant que légèrement supérieure à la course de contact.
